(19) Europäisches Patentamt
European Patent Office
Office européen des brevets

(11) **EP 2 476 505 B1**

(12) **EUROPEAN PATENT SPECIFICATION**

(45) Date of publication and mention
of the grant of the patent:
**16.11.2016 Bulletin 2016/46**

(51) Int Cl.:
*B23K 26/38* (2014.01)      *B23K 26/04* (2006.01)
*B23K 26/067* (2006.01)     *B23K 26/40* (2014.01)
*B28D 5/00* (2006.01)       *H01L 21/301* (2006.01)
*C03B 33/09* (2006.01)

(21) Application number: **10815397.4**

(22) Date of filing: **01.09.2010**

(86) International application number:
**PCT/JP2010/065448**

(87) International publication number:
**WO 2011/030802 (17.03.2011 Gazette 2011/11)**

(54) **LASER PROCESSING METHOD AND LASER PROCESSING DEVICE**

LASERBEARBEITUNGSVERFAHREN UND LASERBEARBEITUNGSVORRICHTUNG

PROCEDE DE TRAITEMENT AU LASER ET DISPOSITIF DE TRAITEMENT AU LASER

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **10.09.2009   JP 2009208789**

(43) Date of publication of application:
**18.07.2012   Bulletin 2012/29**

(73) Proprietor: **Aisin Seiki Kabushiki Kaisha
Aichi 448-8650 (JP)**

(72) Inventors:
• **ATSUMI, Takafumi**
  **Aichi 4488650 (JP)**
• **IKEDA, Yuji**
  **Kyoto-shi**
  **Kyoto 606-0004 (JP)**
• **OMURA, Etsuji**
  **Suita-shi**
  **Osaka 565-0871 (JP)**

(74) Representative: **TBK
Bavariaring 4-6
80336 München (DE)**

(56) References cited:
JP-A- 2004 111 946      JP-A- 2004 111 946
JP-A- 2006 187 783      JP-A- 2006 187 783
JP-A- 2007 142 000      JP-A- 2007 142 000
JP-A- 2008 080 346      JP-A- 2008 080 346
JP-A- 2009 021 597      JP-A- 2009 021 597
JP-A- 2009 125 777      JP-A- 2009 125 777

**Description**

Technical Field

The present invention relates to a laser processing method according to the preamble of claim 1 and a laser processing device according to the preamble of claim 4 for forming a modification region serving as a starting point of cutting, inside a member to be cut, by irradiating the member to be cut with focused laser light along a planned cutting line on the member to be cut.

Background Art

Conventionally, when cutting a hard and brittle material plate such as a semiconductor substrate, a piezoelectric ceramic substrate, a sapphire substrate, and a glass substrate, a short-pulse laser having a wavelength transparent to the plate is focused and irradiated to the inside of a plate to be cut along a planned cutting line, to thereby generate a fine molten trace (modification region), inside which micro cracks grow gregariously, and then a stress is applied and the plate is divided by utilizing cracks caused toward the direction of the plate thickness from the fine molten trace as a starting point (for example, see Patent Document 1).

Furthermore, a processing method is also known, in which one pulse laser beam is divided into three and a time difference is given between them (the second beam is delayed from the first beam and the third beam is delayed from the second beam) and then positions shifted from one another are irradiated with the three focused laser beams (for example, see Patent Document 2).

Patent Document 1 : Japanese Patent Application Laid-Open No. 2005-271563
Patent Document 2 : Japanese Patent Application Laid-Open No. 2006-167804

Summary of Invention

Technical Problem

However, by the conventional laser processing method described above, the laser beam is focused in a circular spot, and thus an inside stress that causes cracks to be generated and grow works isotropically. Because of this, cracks are generated and grow in directions other than the direction along the planned cutting line, and it is not possible to centralize the generation and growth of cracks in the direction of the planned cutting line. As a result, the flatness of the divided section is impaired. Furthermore, there is also a problem in which when a circular spot is irradiated along the planned cutting line, the number of irradiation spots per unit length increases, and thus the processing speed is slow. Moreover, when the plate to be cut is thick, it is necessary to repeat processing while shifting the focus position in the thickness direction, but the amount by which the position is shifted in the thickness direction has to be reduced, and thus the processing speed is further lowered.

As to the processing method in which one pulse laser beam is divided into three and a time difference is given between them, and then positions shifted from one another are irradiated with the three focused laser beams, it is expected that the processing speed in the direction of the planned cutting line (relative movement speed of the optical axis of the condenser lens) can be increased by connecting and forming the three spots in the direction of the planned cutting line. Furthermore, by connecting and forming the three spots in the thickness direction, it is expected that the amount by which the focus position is shifted in the thickness direction can be increased, and the processing speed in the thickness direction (relative movement speed in the thickness direction of the condenser lens) can be increased.

However, excluding the first pulse beam with which first irradiation is performed among the three pulse beams with which continuous irradiation is performed, with a time difference, the subsequent pulse beams are affected by the heat generated by the pulse beam with which previous irradiation was performed. When the brittle material that is the member to be cut is heated to temperatures at which amorphous transition occurs, the material changes into a ductile material, and thus even if the brittle material is irradiated with the subsequent pulse beams in the vicinity of the region heated by the previous pulse beam, it becomes harder for the stress caused by a temperature difference to be generated and at the same time, it becomes harder for cracks to grow because of the influence of the change in the physical properties of the material (for example, dissolution). As a result, the processing speed is not increased as expected.

Furthermore, the refractive index and absorption coefficient of the brittle material that is the member to be cut, for a laser beam also change depending on temperature, and thus, even if the brittle material is irradiated with the subsequent pulse beams in the vicinity of the region heated by the previous pulse beam, the laser beam is absorbed before reaching a focal point and there is also a problem in which a sufficient amount of energy does not reach the focal point or in which the position of the focal point shifts. If the position of the focal point shifts, the three spots cannot be connected in the thickness direction and it is not possible to increase the amount by which the focus position is shifted in the thickness direction. As a result, the processing speed in the thickness direction (relative movement speed in the thickness direction of the condenser lens) is reduced.

The present invention has been made in view of the above-mentioned problems and an object thereof is to provide a laser processing method and a laser processing device having a high processing speed and high energy efficiency.

Means for Solving the Problems

The above object is achieved by a laser processing method according to claim 1 and a laser processing device according to claim **4.**

Further features and advantageous modifications are shown in the dependent claims.

Advantageous Effects of Invention

A plurality of cross-sectional focused spots is simultaneously formed at positions on a cross section which is perpendicular to the optical axis of the condenser lens at positions having a predetermined depth from a surface of a member to be cut and which is parallel to the surface, and thus the generation of a stress due to change of the material into a ductile material is not suppressed or the extension of cracks by the change in physical properties is not suppressed, and the processing speed in the direction of the planned cutting line is increased.

A plurality of depth focused spots is simultaneously formed in the depth direction at positions having a predetermined depth from a surface of a member to be cut, and thus the generation of a stress due to change of the material into a ductile material is not suppressed or the extension of cracks by the change in physical properties is not suppressed, and the processing speed in the thickness direction is increased.

A plurality of cross-sectional focused spots is simultaneously formed at positions on a cross section which is perpendicular to the optical axis of the condenser lens at positions having a predetermined depth from a surface of a member to be cut and a plurality of depth focused spots is simultaneously formed also in the depth direction at positions having a predetermined depth, and thus it is possible to increase both the processing speed in the direction of the planned cutting line and the processing speed in the thickness direction.

When the laser beam is an ultrashort pulse laser beam, even if one laser beam is branched into a plurality of laser beams, the peak value of the pulse of each laser beam has a sufficient margin for a fixed threshold value necessary for amorphous phase transition. Furthermore, pulse irradiation is completed before a heat source is generated, and thus the pulse itself is not affected by heat and it is possible to stably control cracks by a desired heat source.

The figure connecting the plurality of cross-sectional focused spots is a triangle, and thus the wedge effect works in one direction of the direction of the planned cutting line and it is possible to further increase the processing speed in the direction of the planned cutting line.

The figure connecting the plurality of depth focused spots is a triangle, and thus the wedge effect works in one direction of the thickness direction and it is possible to further increase the processing speed in the thickness direction.

The figure connecting the plurality of cross-sectional focused spots is a parallelogram and two acute-angled vertexes of the parallelogram are located on a projection line of the planned cutting line onto the cross section, and thus the wedge effect works in both directions of the directions of the planned cutting line and it is possible to further increase the processing speed in the direction of the planned cutting line.

The figure connecting the plurality of depth focused spots is a parallelogram and two acute-angled vertexes of the parallelogram are located on the optical axis of the condenser lens, and thus the wedge effect works in both directions of the thickness directions and it is possible to further increase the processing speed in the thickness direction.

The inside modification region having a desired shape is formed by using a combination of spatial positions of the plurality of cross-sectional focused spots on the section and an energy density of the focused spot, and thus it is possible to freely control the working of the wedge effect in the direction of the planned cutting line.

The inside modification region having a desired shape is formed by using a combination of spatial positions of the plurality of depth focused spots in a plane including the planned cutting line and an energy density of the focused spot, and thus it is possible to freely control the working of the wedge effect in the thickness direction.

Brief Description of Drawings

Fig. 1 is an outline configuration diagram of a laser processing device of a first embodiment according to the present invention.

Fig. 2 is a perspective view of a member 3 to be cut in Fig. 1.

Fig. 3 is a cross-sectional view along A-A line in Fig. 1.

Fig. 4 is a cross-sectional view along A-A line in Fig. 1 for explaining a modified aspect of the first embodiment.

Fig. 5 is a cross-sectional view along A-A line in Fig. 1 for explaining another modified aspect of the first embodiment.

Fig. 6 is a diagram showing an example of an optical system in the laser processing device of the first embodiment.

Fig. 7 is a diagram showing a modified aspect of the optical system in Fig. 6.

Fig. 8 is an outline configuration diagram of a laser processing device of a second embodiment.

Fig. 9 is a perspective view of the member 3 to be cut in Fig. 8.

Fig. 10 is a cross-sectional view along B-B line in Fig. 9.

Fig. 11 is a cross-sectional view along B-B line in Fig. 9 for explaining a modified aspect of the second embodiment.

Fig. 12 is a cross-sectional view along B-B line in Fig. 9 for explaining another modified aspect of the second embodiment.

Fig. 13 is a diagram showing an example of an optical system in the laser processing device of the second embodiment.

Fig. 14 is a diagram showing a modified aspect of the optical system in Fig. 13.

Fig. 15 is an outline configuration diagram of a laser processing device of a third embodiment.

Fig. 16 is a perspective view of the member 3 to be 3 in Fig. 15.

Fig. 17 is a cross-sectional view along A-A line and a cross-sectional view along B-B line in Fig. 16.

Fig. 18 is a diagram showing an example of an optical system in the laser processing device of the third embodiment.

Fig. 19 is a diagram showing a modified aspect of the optical system in Fig. 18.

Fig. 20 is a diagram showing another modified aspect of the optical system in Fig. 18.

Fig. 21 is a diagram showing still another modified aspect of the optical system in Fig. 18.

Fig. 22 shows heat source temperature distribution patterns immediately after two focused spots are formed.

Fig. 23 shows heat source temperature distribution patterns after 10 nsec when forming three focused spots by varying time difference $\tau$.

Fig. 24 shows heat source temperature distribution patterns and stress distribution patterns when the interval between two focused spots (spot diameter: 2 $\mu$m) is 2 $\mu$m.

Fig. 25 shows heat source temperature distribution patterns and stress distribution patterns when the interval between two focused spots (spot diameter: 2 $\mu$m) is 4 $\mu$m.

Fig. 26 is a graph showing a relation between the interval between focused spots and the stress.

Fig. 27 is a graph showing a change of the stress with time.

Fig. 28 shows a diagram for explaining a spatial arrangement of the focused spots in an example and a radiograph of sapphire after laser processing.

Fig. 29 shows a diagram for explaining a spatial arrangement of the focused spots in a comparative example and a radiograph of sapphire after laser processing.

Reference Signs List

21, 201, 2A1, 20A1, 20B1, 2B1, 2C1, 2D1, 2E1: condenser lens
O: optical axis
S0: planned cutting line
3: member to be cut
3a: surface
3b: cross section
P0, P1, P2, P3: cross-sectional focused spot
Q0, Q1, Q2, Q3: depth focused spot
2, 20, 2A, 20A, 20B, 2B, 2C, 2D, 2E: optical system

Description of Embodiments

(First embodiment)

Embodiments for embodying the present invention will be explained below in detail based on the drawings.

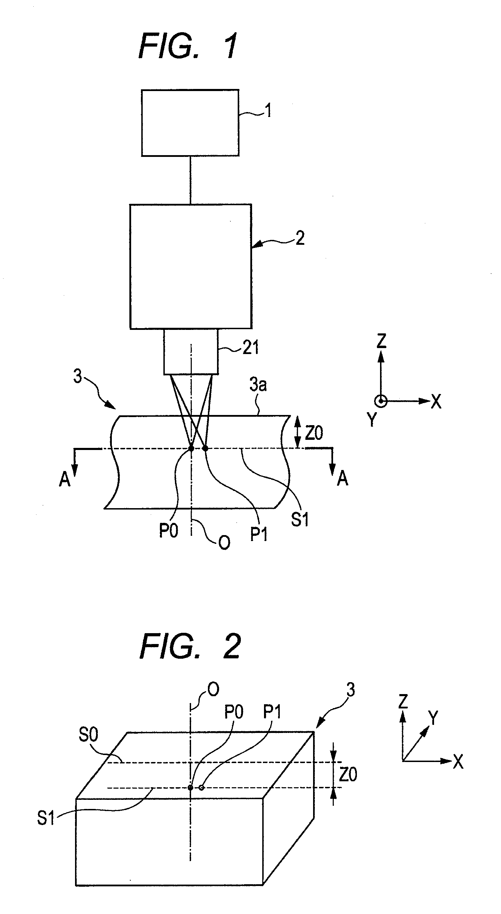

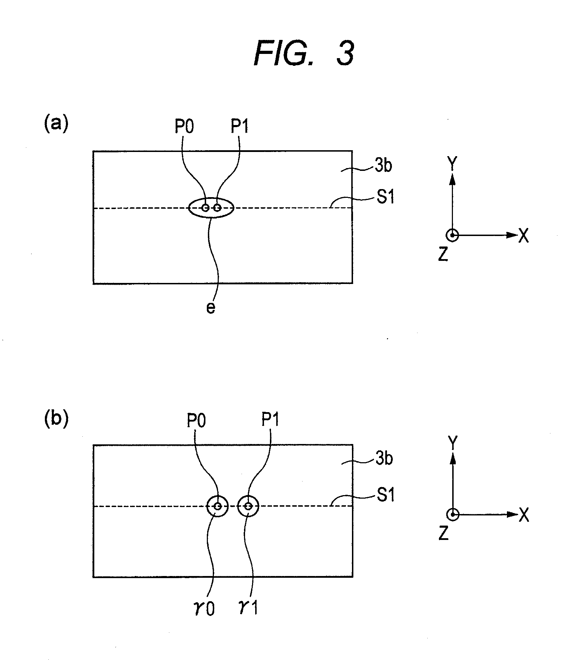

Fig. 1 is an outline configuration diagram of a laser processing device of a first embodiment. Fig. 2 is a perspective view of a member 3 to be cut in Fig. 1 and Fig. 3 is a cross-sectional view along A-A line in Fig. 1.

As shown in Fig. 1 to Fig. 3, the laser processing device of the present embodiment comprises an optical system 2 that simultaneously forms a plurality of cross-sectional focused spots P0 and P1 on a section 3b which is perpendicular to an optical axis O of a condenser lens 21 at positions having a predetermined depth Z0 from a surface 3a of the member 3 to be cut and which is parallel to the surface 3a and at that time, forms at least one cross-sectional focused spot of the plurality of cross-sectional focused spots P0 and P1 on a projection line S1 of a planned cutting line S0 onto the cross section 3b.

Reference numeral 1 denotes a light source that generates a repetitive ultrashort pulse laser beam having a wavelength transparent to the member 3 to be cut. By using a mode locked fiber laser doped with Er or Yb, which generates a laser beam having a wavelength of 1 to 2 $\mu$m, a pulse width of 10 fs to 20 ps, and a repetitive frequency of 100 kHz to 10 MHz as the light source 1, the laser beam is multiphoton-absorbed in a focused spot position of the member 3 to be cut, such as glass, sapphire, quartz, and silicon, and an inside modification region is formed.

In the present embodiment, the two focused spots P0 and P1 are formed on the projection line S1 of the planned cutting line S0 onto the cross section 3b. By moving a mobile stage, not shown schematically, in an X direction, the pair of the two focused spots P0 and P1 is formed sequentially on S1.

Because the two focused spots P0 and P1 are in contact with or close to each other, they fuse together within a short time period and form an elliptic heat source temperature distribution pattern e as shown in Fig. 3(a). Since the two focused spots P0 and P1 are located on the projection line S1, the major axis of the elliptic heat source temperature distribution pattern e is also located on the projection line S1. As a result, stress anisotropy, that is, a stress that causes cracks to grow in the major axis direction occurs within the member 3 to be cut, and thus it is possible to increase the interval at which the next two spots P0 and P1 are formed. That is, it is possible to increase the feeding speed of the mobile stage in the X direction (processing speed in the cutting direction).

Furthermore, the two focused spots P0 and P1 are simultaneously formed, and thus there is not a problem in which a sufficient amount of energy does not reach the focal point or in which the position of the focal point shifts.

Next, a modified aspect of the first embodiment will be explained. It may also be possible to form the two focused spots P0 and P1 so that an interval between the two focused spots P0 and P1 is enlarged to set the interval to a predetermined interval, as shown in Fig. 3(b). In this case, the two focused spots P0 and P1 no longer fuse together but form independent circular heat source temperature distribution patterns $\gamma$0 and $\gamma$1. Between the independent circular heat source temperature distribution patterns $\gamma$0 and $\gamma$1, a tensile stress works and the extension of cracks in the direction of the projection line S1 (cutting direction) is promoted.

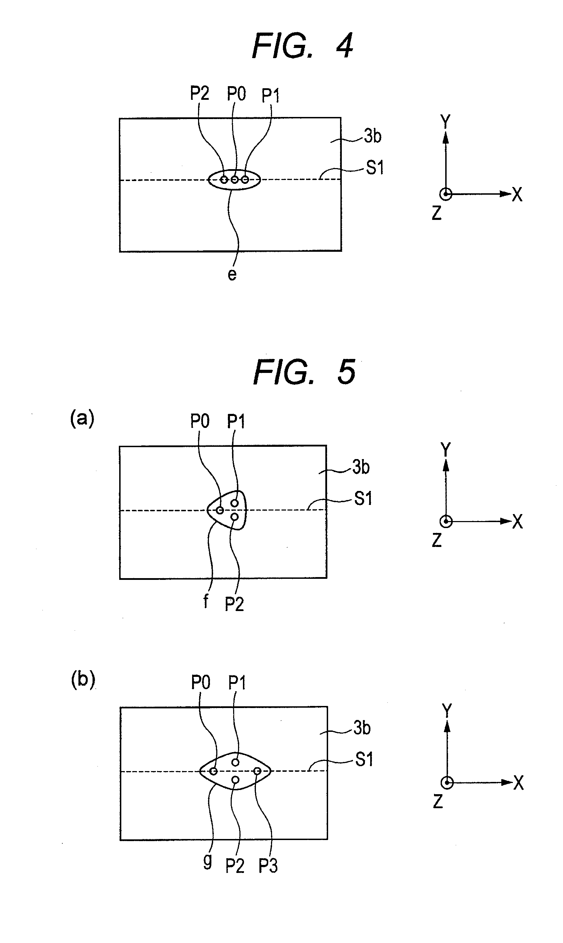

Moreover, it may also be possible to simultaneously form the three focused spots P0, P1, and P2 as shown in Fig. 4. At that time, by setting energy densities to be injected into P0, P1, and P2 as E0, E1, and E2, respectively, satisfying E0 > E1 and E0 > E2 results in an increase of the stress anisotropy (wedge effect), and thus it is possible to furthermore increase the processing speed.

It is preferable that the figure connecting the three focused spots P0, P1, and P2 draws a triangle as shown in Fig. 5(a). The three focused spots P0, P1, and P2 fuse together to form a triangular heat source temperature distribution pattern f, and it is possible to cause the wedge effect to act in the left-hand direction.

Furthermore, it may also be possible that the figure connecting the four focused spots P0, P1, P2, and P3 draws a parallelogram, and that the two acute-angled vertexes P0 and P3 of the parallelogram are caused to be located on the projection line S1. The four focused spots P0, P1, P2, and P3 fuse together to form a parallelogrammatic heat source temperature distribution pattern g and the wedge effect acts in the left-hand and right-hand directions, and it is possible to further increase the processing speed in the cutting direction.

Here, "simultaneity" in simultaneously forming a plurality of focused spots in the present invention will be explained. It is impossible to simultaneously form a plurality of focused spots in spatially different positions and there is naturally a time width (time difference) $\tau$ among the plurality of focused spots. Therefore, it has been investigated to what extent the time difference $\tau$ is allowed by simulation experiments (see Simulation 2, to be described later). As a result, when the member to be cut is typical sapphire, $\tau = 0.3$ nsec was obtained. Because of this, in the present invention, a range between 0 and subnano sec is defined as "simultaneity".

Like in the present embodiment, by using an ultrashort pulse laser beam, it is possible to cause heat to be generated extremely locally and to achieve high temperature, and thus the present embodiment has the following two merits.

First, the molten region is located locally, and thus the range in which the material changes into a ductile material is narrow and the brittleness on the periphery thereof is kept. As a result, cracks extend preferably when a thermal stress acts. When the pulse width is large, the molten range extends, and thus the extension of cracks due to change of the material into a ductile material is suppressed.

Next, since the peak power is high, the temperature gradient becomes steep. Consequently, a large thermal stress is generated. When the pulse width is large, the temperature gradient becomes gradual because the peak power is small, and in addition, a state continues in which heat enters while heat is dissipated, and thus the temperature gradient becomes more gradual and it becomes harder for the thermal stress to be generated.

When irradiation with a plurality of beams is simultaneously performed and the interval between each spot is about five times or less the wavelength, that is, narrow, beams interfere with one another and there is a possibility that the intensity distribution varies depending on the degree of the interference, and thus it is necessary to perform processing that has taken into account the influence. Consequently, in order to maintain the intended intensity distribution and to obtain a desired heat source temperature distribution pattern more effectively, it is desirable to irradiate each beam while providing a time difference of the degree of the pulse width between each beam. Like in the present embodiment, by using the ultrashort pulse laser beam, it becomes possible to perform irradiation by giving a time difference of the degree of the pulse width in the range of "simultaneity" defined within the present invention, and thus there is an advantage that it is possible to avoid the influence of heat generated by the pulse with which irradiation has been performed previously in terms of time.

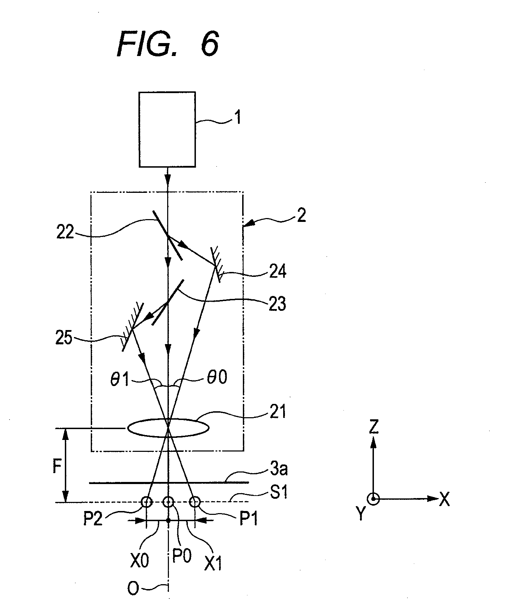

The optical system 2 in a laser processing method of the present embodiment includes, for example, the one shown in Fig. 6. Reference numerals 22 and 23 in Fig. 6 denote beam splitters and reference numerals 24 and 25 denote mirrors.

The laser beam emitted from the light source 1 is split into two by the beam splitter 22. The laser beam reflected by the beam splitter 22 is reflected by the mirror 24 and enters the conversing lens 21 at an angle $\theta 0$ between the beam and the optical axis O. The laser beam having passed through the beam splitter 22 is split further into two by the next beam splitter 23. The laser beam reflected by the beam splitter 23 is reflected by the mirror 25 and enters the condenser lens 21 at an angle 61 between the beam and the optical axis O. The laser beam having passed through the beam splitter 22 travels on the optical axis O and enters the condenser lens 21.

The laser beam having traveled on the optical axis 0 and having entered the condenser lens 21 is focused at the intersection of the projection line S1 and the optical axis O, and forms the focused spot P0. The laser beam having entered at $\theta 0$ between the beam and the optical axis O is focused at a position apart from the focused spot P0 by X0 on the projection line S1 and forms the focused spot P2. The laser beam having entered at 61 between the beam and the optical axis O is focused at a position apart from the focused spot P0 by X1 on the projection line S1 and forms the focused spot P1.

If the focal length of the condenser lens 21 is defined as F, there is a relation expressed by

$$X0 = F \tan \theta 0$$
$$X1 = F \tan \theta 1,$$

and thus it is possible to change the intervals between the three focused spots P0, P1, and P2 by changing 6.

In the optical system 2 in Fig. 6, the optical paths of the laser beams forming the three focused spots P0, P1, and P2 are different and it is necessary to reduce the optical path difference so as to satisfy the above-mentioned "simultaneity". By using an optical delay medium, it is possible to adjust the optical path difference.

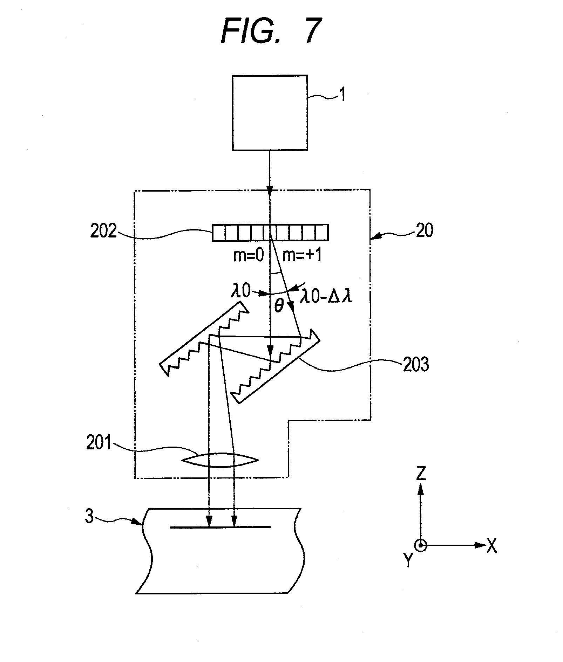

Next, a modified aspect of the optical system 2 will be explained. As the optical system 2, it is possible to use an optical system 20 shown in Fig. 7. A beam, the wavelength of which has shifted (first-order beam) and a beam, the wavelength of which has not shifted (zeroth-order beam) are generated by an acousto-optical modulator (AOM) 202 and inserted into a grating pair 203. By the grating pair 203, the optical path difference between the two beams is adjusted so as to satisfy simultaneity. Changing $\theta$ by the change of the sound wave frequency of the AOM 202 or adjusting the number or dimension of gratings (pitch) of the grating pair 203 results in changing the angle of incidence upon the condenser lens 201, and thereby the position of the focused spot in the X direction is changed.

It is possible to control the position of the focused spot by changing the sound wave frequency of the AMO 202 according to an electric signal from outside.

(Second embodiment)

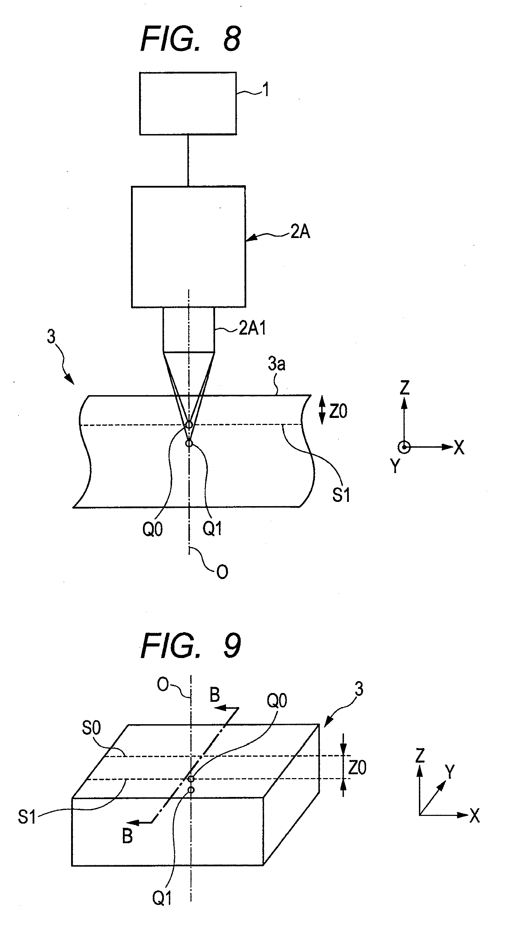

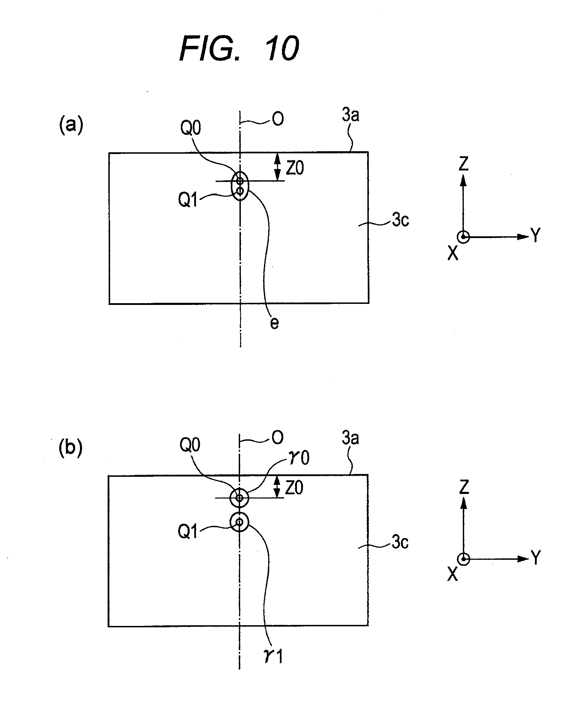

Fig. 8 is an outline configuration diagram of a laser processing device of a second embodiment. Fig. 9 is a perspective view of the member 3 to be cut in Fig. 8, and Fig. 10 is a cross-sectional view along B-B line in Fig. 9.

As shown in Figs. 8 to 10, the laser processing device of the present embodiment includes an optical system 2A that simultaneously forms a plurality of depth focused spots Q0 and Q1 in the depth direction at positions having a predetermined depth Z0 from the surface 3a of the member 3 to be cut and, at that time, forms at least one depth focused spot of the plurality of depth focused spots Q0 and Q1 on the optical axis O of a condenser lens 2A1.

In the present embodiment, the focused spot Q0 is formed at the depth Z0 from the surface 3a on the optical axis O and the focused spot Q1 is formed at a position deeper in the depth direction (Z direction) than the focused spot Q0 on the optical axis O. By moving a mobile stage, not shown schematically, in the X direction, the two focused spots Q0 and Q1 are formed sequentially in the X direction.

The two focused spots Q0 and Q1 partially overlap or are in contact with or close to each other, and thus they fuse together and form the elliptic spot e as shown in Fig. 10(a). The two focused spots Q0 and Q1 are located on the optical axis O, and thus the major axis of the elliptic spot e is also located on the optical axis O. As a result, stress anisotropy, that is, a stress that causes cracks to grow in the major axis direction (depth direction) is generated and it is possible to increase the interval in the depth direction at which the other spots Q0 and Q1 are simultaneously formed in the depth direction. That is, it is possible to increase the feeding speed of the mobile stage in the Z axis direction (processing speed in the thickness direction).

Furthermore, the two focused spots Q0 and Q1 are simultaneously formed, and thus there is not a problem in which a sufficient amount of energy does not reach the focal point or in which the position of the focal point shifts.

Next, a modified aspect of the second embodiment will be explained. As shown in Fig. 10(b), it may also be possible to form the two focused spots Q0 and Q1 at an interval larger than a predetermined interval. In this case, the two focused spots Q0 and Q1 no longer fuse together but form the independent circular heat source temperature distribution patterns γ0 and γ1. Between the independent circular heat source temperature distribution patterns γ0 and γ1, a tensile stress works, and the extension of cracks in the direction of the optical axis O (thickness direction) is promoted.

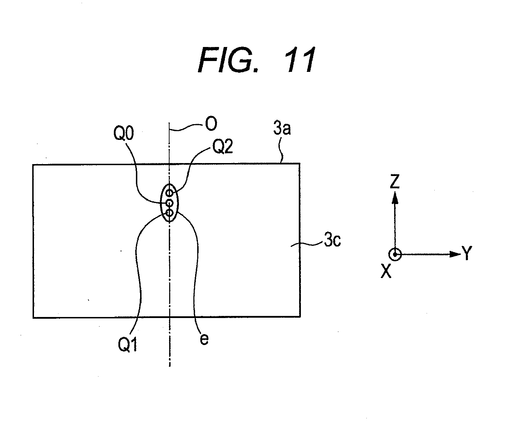

Furthermore, as shown Fig. 11, it may also be possible to simultaneously form the three focused spots Q0, Q1, and Q2. At that time, by setting the energy densities to be injected into Q0, Q1, and Q2, as E0, E1, and E2, satisfying E0 > E1 and E0 > E2 results in an increase of the stress anisotropy (wedge effect), and thus it is possible to further increase the processing speed.

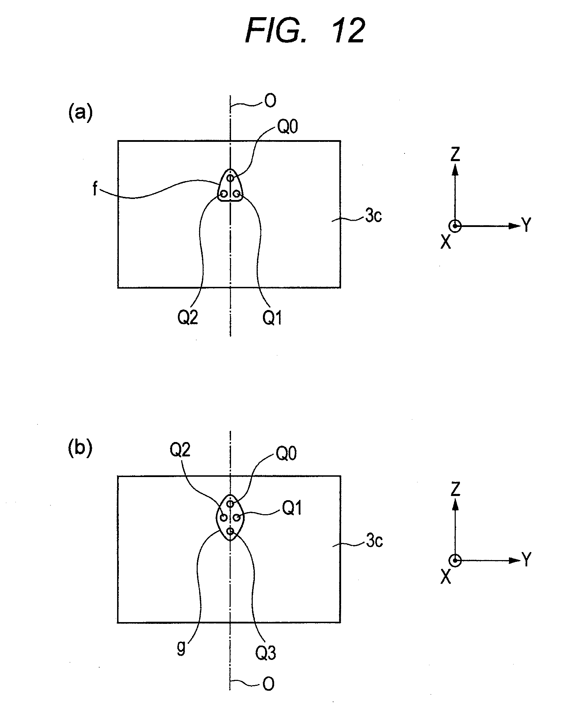

In addition, it is preferable for the figure connecting the three focused spots Q0, Q1, and Q2 to draw a triangle as shown in Fig. 12(a). The three focused spots Q0, Q1, and Q2 fuse together and form the triangular heat source temperature distribution pattern f and it is possible to cause the wedge effect to act in the upward direction.

Moreover, as shown in Fig. 12(b), it may also be possible to cause the figure connecting the four focused spots Q0, Q1, Q2, and Q3 to draw a parallelogram and to cause the two acute-angled vertexes Q0 and Q3 of the parallelogram, to be located on the optical axis O. The four focused spots Q0, Q1, Q2, and Q3 fuse together and form the parallelogrammatic heat source temperature distribution pattern g and the wedge effect acts in the vertical direction, and thus it is possible to further increase the processing speed in the thickness direction.

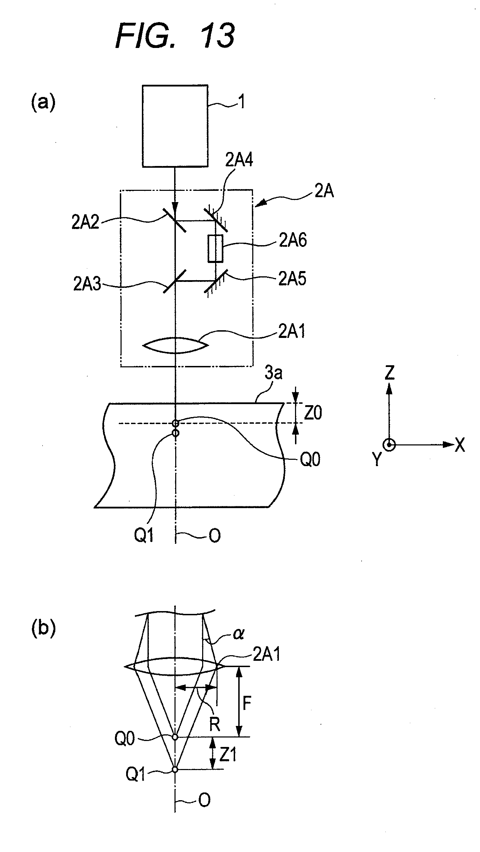

The optical system 2A in the laser processing device of the present embodiment includes, for example, the one shown in Fig. 13. In Fig. 13, reference numerals 2A2 and 2A3 denote beam splitters and reference numerals 2A4 and 2A5 denote mirrors. Reference numeral 2A6 denotes a relay lens.

The laser beam emitted from the light source 1 is split into two by the beam splitter 2A2. The laser beam having passed through the beam splitter 2A2 passes through the beam splitter 2A3 and enters the condenser lens 2A1. The laser beam reflected by the beam splitter 2A2 is converted into a laser beam having a spread angle α by the relay optical system 2A6 and then is reflected by the beam splitter 2A3 and enters the condenser lens 2A1.

The laser beam having passed through the beam splitter 2A3 is focused in the focus position of the condenser lens 2A1 as shown in Fig. 13(b) and forms the focused spot Q0. The laser beam reflected by the beam splitter 2A3 is focused at a position Z1 lower than the focused spot Q0 and forms the focused spot Q1.

If the beam radius of the laser beam reflected by the beam splitter 2A3 at the condenser lens 2A1 is set as R, there is a relation expressed by

$$Z1 = \{RF \ / \ (R - F \tan \alpha) \ \} - F,$$

and thus it is possible to change the interval between the focused spots Q0 and Q1 by changing the spread angle α.

It should be noted that in the optical system 2A in Fig. 13, the optical paths of the laser beams forming the two focused spots Q0 and Q1 are different and it is necessary to reduce the optical path difference through the use of an optical delay medium or the like so as to satisfy the above-mentioned simultaneity.

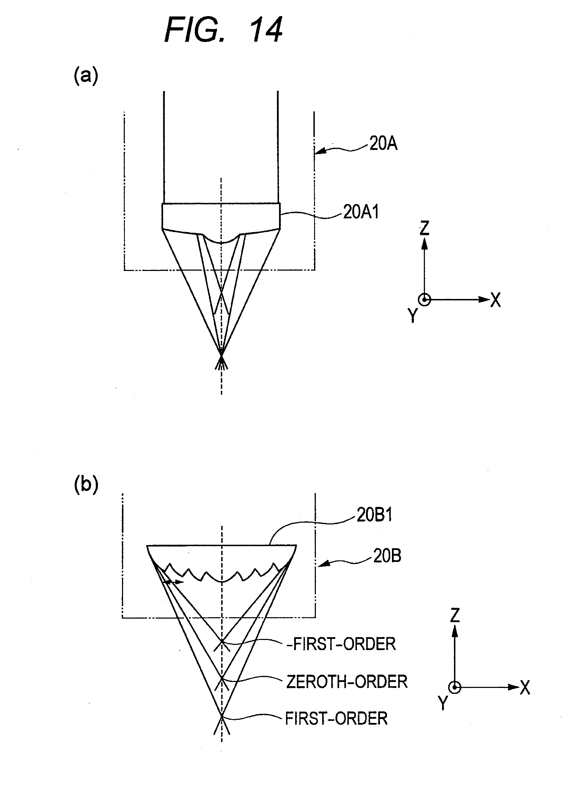

Next, a modified aspect of the optical system 2A will be explained. As the optical system 2A, it is possible to use optical systems 20A and 20B shown in Fig. 14.

As shown in Fig. 14(a), it is possible to separate focused spots by using a multifocal lens 20A1 in which the curvature at the center part is different from that on the periphery. In Fig. 14(a), a method for separating focused spots in the Z direction is illustrated, but it is also possible to separate focused spots in the X direction.

Furthermore, as shown in Fig. 14(b), it is possible to separate focused spots in the Z direction by using a diffractive lens (Fresnel lens) 20B1. It is possible to adjust the intensity of a focused spot by each diffracted beam by adjusting the groove shape of the diffractive lens 20B1.

(Third embodiment)

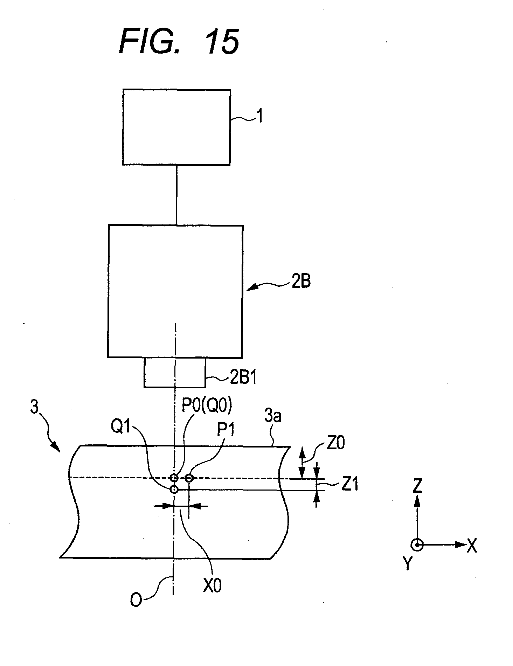

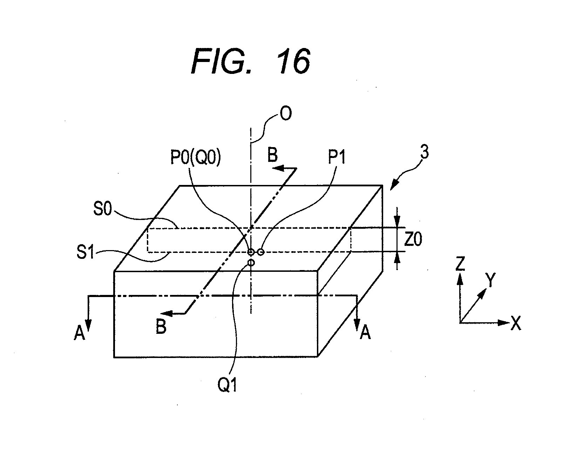

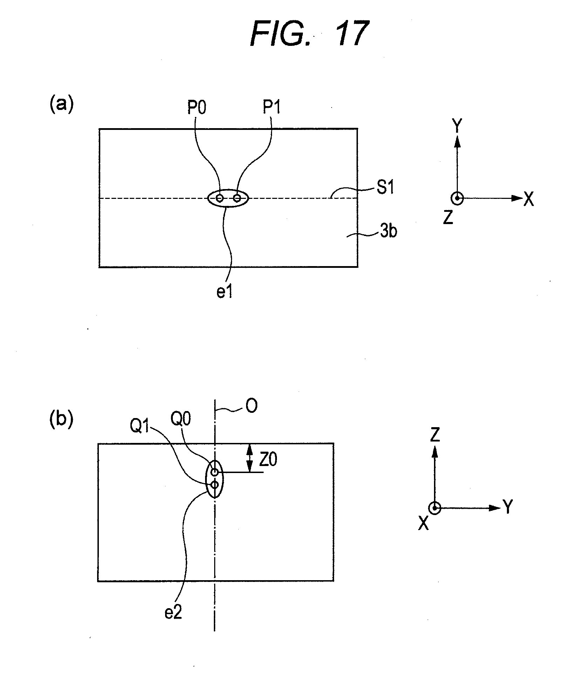

Fig. 15 is an outline configuration diagram of a laser processing device of a third embodiment. Fig. 16 is a perspective view of the member 3 to be cut in Fig. 15, Fig. 17(a) is a cross-sectional view along A-A line in Fig. 16, and Fig. 17(b) is a cross-sectional view along B-B line in Fig. 16.

As shown in Figs. 15 to 17, the laser processing device of the present embodiment includes an optical system 2B that simultaneously forms a plurality of cross-sectional focused spots P0 and P1 on the section 3b which is perpendicular to the optical axis O of a condenser lens 2B1 at a position at the predetermined depth Z0 from the surface 3a of the member 3 to be cut and which is parallel to the surface 3a, at that time, forms at least one cross-sectional focused spot of the plurality of cross-sectional focused spots P0 and P1 on the projection line S1 of the planned cutting line S0 onto the cross section 3b, simultaneously forms a plurality of depth focused spots Q0 and Q1 also at a position at the predetermined depth Z0 in the depth direction, and, at that time, forms at least one depth focused spot of the plurality of depth focused spots Q0 and Q1 on the optical axis O of the condenser lens 2B1.

In the present embodiment, the two focused spots P0 and P1 are formed on the projection line S1 of the planned cutting line S0 onto the cross section (XY plane) 3b, the focused spot Q0 is formed in the position deep from the surface 3a by Z0 on the optical axis O, and the focused spot Q1 is formed at a position (deep from the surface 3a by (Z0 + Z1)) deeper than the focused spot Q0 on the optical axis O.

The two focused spots P0 and P1 are in contact with or close to each other, and thus they fuse together in a short time period and form an elliptic spot e1 as shown in Fig. 17(a). Because the two focused spots P0 and P1 are located on the projection line S1, the major axis of the elliptic heat source temperature distribution pattern e1 is located also on the projection line S1. As a result, stress anisotropy, that is, a stress that causes cracks to grow in the major axis direction is generated and it is possible to increase the interval at which the next two spots P0 and P1 are formed. Accordingly, it is possible to increase the feeding speed of the mobile stage in the X axis direction (processing speed in the cutting direction).

Furthermore, the two focused spots Q0 and Q1 partially overlap or are in contact with or close to each other, and thus, they fuse together in a short time period and form an elliptic spot e2 as shown in Fig. 17(b). Because the two focused spots Q0 and Q1 are located on the optical axis 0, the major axis of the elliptic heat source temperature distribution pattern e2 is located also on the optical axis O. As a result, stress anisotropy, that is, a stress that causes cracks to grow in the major axis direction (depth direction) is generated and it is possible to increase the interval in the depth direction at which the other spots Q0 and Q1 are simultaneously formed in the depth direction. That is, it is possible to increase the amount by which the focus position is shifted in the thickness direction and to increase the processing speed in the thickness direction (the relative movement speed in the thickness direction of the condenser lens).

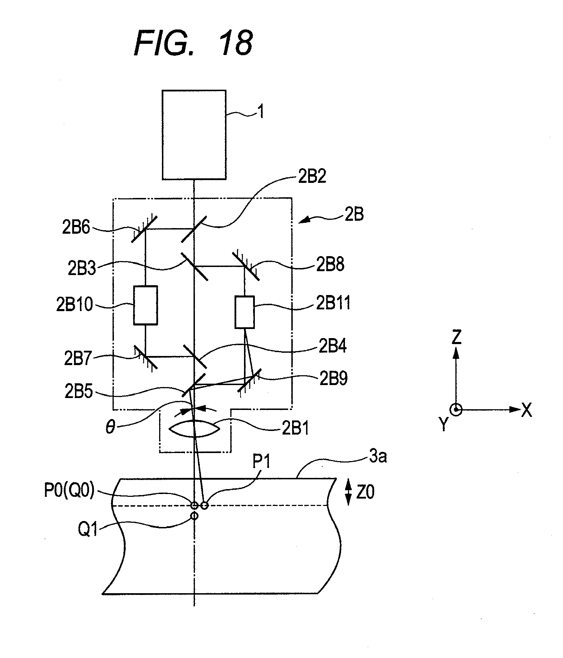

The optical system 2B in the laser processing device of the present embodiment includes, for example, the one as shown in Fig. 18. In Fig. 18, reference numerals 2B2, 2B3, 2B4, and 2B5 denote beam splitters, reference numerals 2B6, 2B7, 2B8, and 2B9 denote mirrors, and reference numerals 2B10 and 2B11 denote relay lenses.

The laser beam emitted from the light source 1 is split into two by the beam splitter 2B2 and one of the laser beams is further split by the beam splitter 2B3.

The laser beam having passed through the beam splitter 2B2 passes through the beam splitters 2B3, 2B4, and 2B5, and enters the condenser lens 2B1 to form the focused spot P0 (Q0).

The laser beam reflected by the beam splitter 2B2 is converted into a laser beam having the spread angle $\alpha$ by the relay lens 2B10. Then, the laser beam is reflected by the beam splitter 2B4, enters the condenser lens 2B1, and forms the focused spot Q1. It should be noted that it is possible to change the spread angle by changing the lens interval of the relay lens 2B10 (distance in the Z direction).

The propagation direction of the laser beam reflected by the beam splitter 2B3 is changed by the relay lens 2B11. Then, the laser beam is reflected by the beam splitter 2B5 and enters the condenser lens 2B1 in the direction forming 6 between the beam and the optical axis O and forms the focused spot P1. Meanwhile, when the magnification of the relay lens 2B11 is large, it is possible to change the propagation direction by changing a tilt angle of the relay lens 2B11.

It should be noted that in the optical system 2B in Fig. 18, the optical paths of the laser beams that form the three focused spots P0 (Q0), P1, and Q1 are different and it is necessary to reduce the optical path difference so as to satisfy the above-mentioned simultaneity.

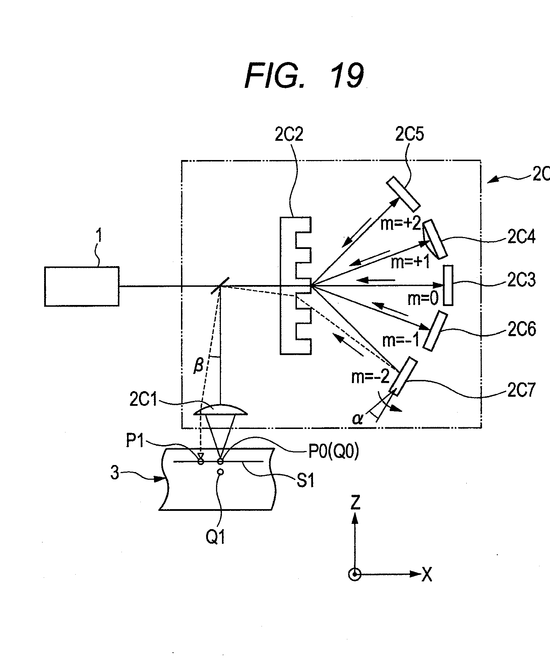

Next, a modified aspect of the optical system 2B will be explained. An optical system 2C as shown in Fig. 19 may be used in place of the optical system 2B. The optical system 2C independently reflect second-order and higher-order diffracted beams obtained by a diffraction grating 2C2, at mirrors 2C3 to 2C7 and focuses returned beams at a condenser lens 2C1.

By arranging the mirrors 2C3 to 2C7 that independently reflect each n-th order beam and by adjusting the angle of each mirror with respect to the incident beam, it becomes possible to change each of the angles of incidence of the returned beams upon the condenser lens 2C1, and the focused spots P0 and P1 are formed on the projection line S1 of the planned cutting line S0 of the member 3 to be cut onto a section (XY plane).

Between the adjusted angle $\alpha$ of the mirror 2C7 and an angle of incidence $\beta$ upon the condenser lens 2C1, there is a relation expressed by

$$\beta = 2 \; \alpha \; \cos \; \theta t \; / \; \cos \; \theta i,$$

and thus it is possible to change the angle of incidence $\beta$ by adjusting $\alpha$. Here, $\theta i$ is an angle of incidence upon the diffraction grating 2C2 and $\theta t$ is an emission angle from the diffraction grating 2C2.

Furthermore, by adjusting the curvature of the reflecting surface of each of the mirrors 2C3 to 2C7, it becomes possible to change each spread angle (or narrowed angle) of the returned beam when entering the condenser lens 2C1, and thus it is possible to form desirable focused spots spatially separated in the Z direction.

By adjusting the shape of the diffraction grating 2C2, it is possible to optimize the intensity of each n-th order beam to a desired intensity.

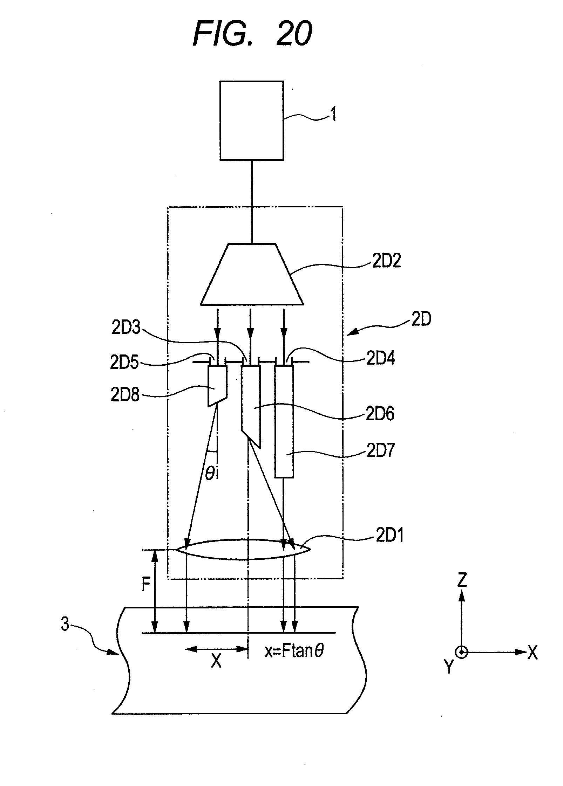

Furthermore, an optical system 2D as shown in Fig. 20 may be used in place of the optical system 2B. One beam emitted from the light source 1 is expanded by a beam expander 2D2 and is caused to enter glass rods 2D6 to 2D8 attached to a number of apertures 2D3 to 2D5. By changing the end surface angle on the emission side of the glass rods 2D6 to 2D8, it is possible to change the angle of the beam incident upon a condenser lens 2D1 and to change the position of the focused spot in the X direction.

Furthermore, by adjusting the curvature of the end surface on the emission side of the glass rods 2D6 to 2D8, it is possible to change each spread angle (or narrowed angle) when entering the condenser lens 2D1 and to change the position in the Z direction. Alternatively, by using a SELFOC lens (lens having a refractive index distribution in which the refractive index becomes smaller toward the outside of the radius) in place of the simple glass rod, it is possible to change each spread angle (or narrowed angle) when entering the condenser lens 2D1 and also to change the position in the Z direction.

It is further desirable to form a lens like a fly-eye lens by stacking hexagonal glasses instead of attaching the glass rods 2D6 to 2D8 to the apertures 2D3 to 2D5, because a vignetting part is eliminated and a loss is suppressed.

With a normal Gaussian beam, the intensity distribution between focal points after separation is also similar to a Gaussian one. In order to make uniform the intensity distribution of each focused spot, it is necessary to provide a top-hat distribution conversion optical system at the upstream of the apertures 2D3 to 2D5 to thereby make the intensity of the beam incident upon each aperture uniform.

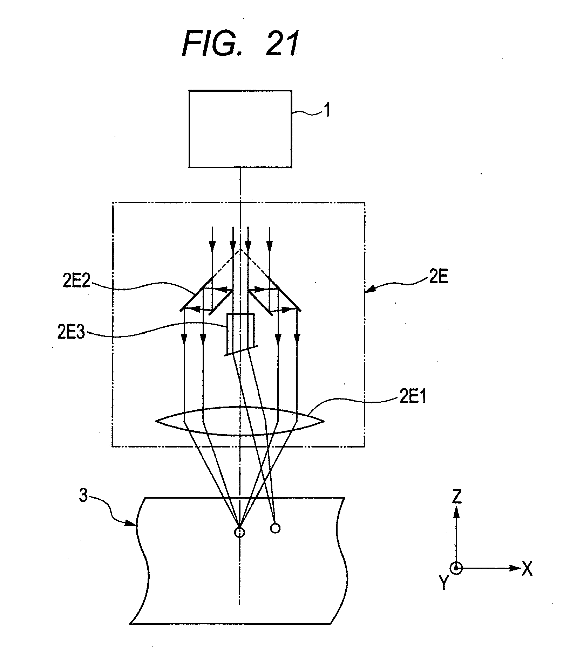

Furthermore, an optical system 2E as shown in Fig. 21 may be used in place of the optical system 2B. A beam emitted from the light source 1 is separated into a beam having a small center and a doughnut-shaped beam through the use of an axicon mirror pair 2E2 having a hole and is focused by a condenser lens 2E1. In order to uniform the arrival time of the laser beam that is returned within the axicon mirror pair 2E2 at the condenser lens 2E1 and the arrival time of the laser beam that passes through the hole in the center at the condenser lens 2E1, the length of a delay medium 2E3 is adjusted so that the optical path length returned within the axicon mirror pair 2E2 and the effective optical path length within the delay medium 2E3 are made uniform. By changing the end surface angle on the emission side of the delay medium 2E3, it is possible to change the angle of the beam incident upon the condenser lens 2E1 and to change the position of the focused spot in the X direction. Furthermore, by adjusting the curvature of the end surface on the emission side of the delay medium 2E3, it is possible to change each spread angle (or narrowed angle) when entering the condenser lens and to change the position in the Z direction. Alternatively, by using a SELFOC lens as the delay medium 2E3, in place of the simple uniform medium, it is possible to change each spread angle (or narrowed angle) when entering the condenser lens 2E1 and also to change the position in the Z direction.

Next, the simulation results and experimental results of the present invention will be explained.

[Simulation 1] The way the plurality of focused spots simultaneously formed by the laser processing device of the first embodiment fuses together in a short time period and forms one elliptic heat source temperature pattern was simulated through the use of a "thermal conduction numerical analysis model by inside cylindrical heat source series".

The main simulation conditions are as follows:

Member to be cut: Sapphire
Focused spot formation depth Z0: 20 $\mu$m
Focused spot diameter: 2 $\mu$m
Focused spot center interval: 2 $\mu$m
Number of focused spots: 3
Laser pulse energy per focused spot: 0.25 $\mu$J.

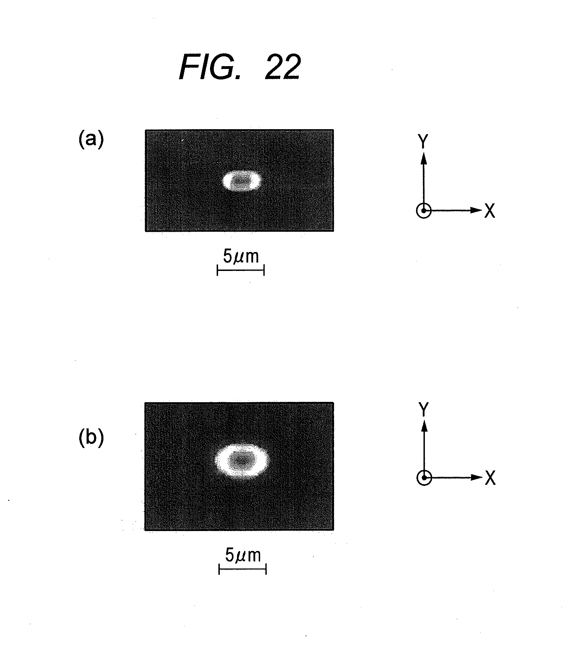

The simulation results are shown in Fig. 22. When about 10 ps elapsed after irradiation of the laser pulse, an elliptic heat source temperature distribution pattern shown in Fig. 22(a) was formed. Fig. 22(b) shows the elliptic heat source temperature distribution pattern 10 ns after that in Fig. 22(a). The temperature of the deepest black region in the center was about 4,000°K, that of the whitish region on the outside was about 1,500°K, and that of the intermediate region was 2,500 to 3,000°K.

From this simulation, it can be found that when irradiation with a plurality of focused laser pulses is persimultaneously formed, the focused spots fuse together almost instantaneously (after about 10 ps) and the elliptic heat source temperature distribution pattern appears.

[Simulation 2] The shape and dimension of a heat source temperature distribution pattern when three focused spots are formed with no time difference ($\tau = 0$) and the shape and dimension of a heat source temperature distribution pattern when the three focused spots are formed with time differences of 0.003 nsec, 0.03 nsec, and 0.3 nsec were simulated through the use of the "thermal conduction numerical analysis model by inside cylindrical heat source series".

The main simulation conditions are as follows:

Member to be cut: Sapphire
Focused spot formation depth Z0: 5 $\mu$m
Focused spot diameter: 2 $\mu$m
Focused spot center interval: 2 $\mu$m
Number of focused spots: 3
Time difference between focused spots: 0 sec, 0.003 nsec, 0.03 nsec, 0.3 nsec
Laser pulse energy per focused spot: 1 $\mu$J.

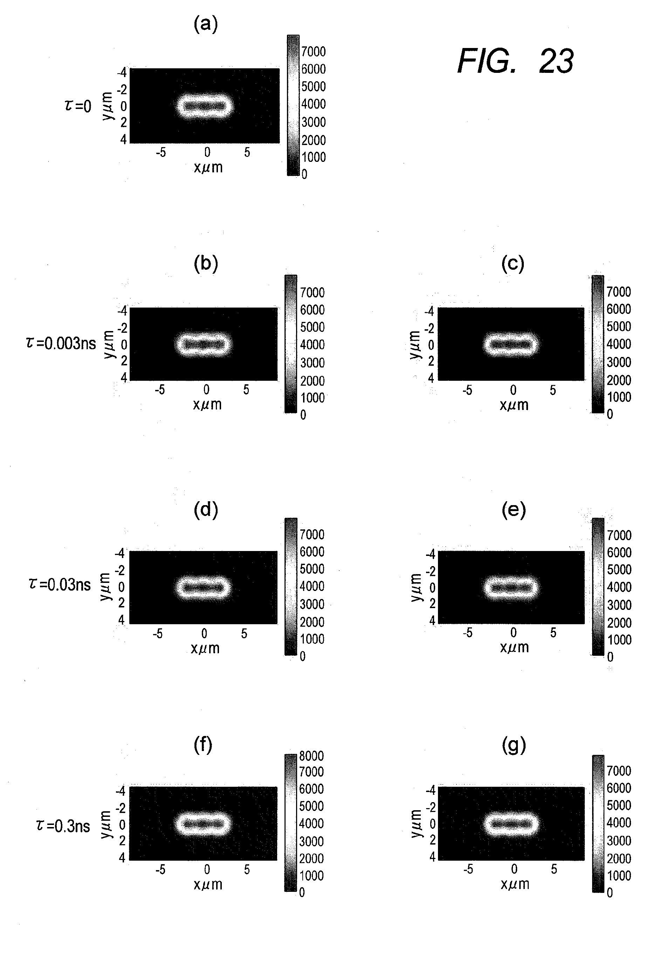

The simulation results are shown in Fig. 23. Fig. 23 shows heat source temperature distribution patterns when 10 nsec elapsed after forming three focused spots, in which (a) shows a heat source temperature distribution pattern when the three focused spots were formed with a time difference of 0, (b) shows a heat source temperature distribution pattern when the middle focused spot was formed 0.003 nsec after forming the focused spots on both sides, (c) shows a heat source temperature distribution pattern when the focused spots on both ends were formed 0.003 nsec after forming the middle focused spot, (d) shows a heat source temperature distribution pattern when the middle focused spot was formed 0.03 nsec after forming the focused spots on both sides, (e) shows a heat source temperature distribution pattern when the focused spots on both ends were formed 0.03 nsec after forming the middle focused spot, (f) shows a heat source temperature distribution pattern when the middle focused spot was formed 0.3 nsec after forming the focused spots on both sides, and (g) shows a heat source temperature distribution pattern when the focused spots on both ends were formed 0.3 nsec after forming the middle focused spot.

From Fig. 23, it can be found that even the shape and dimension of the temperature distribution patterns (f) and (g) when $\tau = 0.3$ nsec, which is the most delayed time in this simulation, are the same as those of the source temperature distribution pattern (a) when $\tau = 0$. Accordingly, when a plurality of focused spots is formed in sapphire, if the time difference between the plurality of focused spots is at least within 0.3 nsec, it is possible to obtain a heat source temperature distribution pattern having the same shape and dimension as those when the plurality of focused spots is simultaneously formed (with no time difference).

[Simulation 3] A heat source temperature distribution pattern when the interval between two focused spots is changed was simulated through the use of the "thermal conduction numerical analysis model by inside cylindrical heat source series". Next, a stress distribution at that time was obtained through the use of a "stress analysis model by finite element method".

The main simulation conditions are as follows:

Member to be cut: Sapphire
Focused spot formation depth Z0: 20 $\mu$m
Focused spot diameter: 2 $\mu$m
Focused spot center interval: 2 $\mu$m, 4 $\mu$m, and 6 $\mu$m
Number of focused spots: 2
Laser pulse energy per focused spot: 1 $\mu$J
Analysis region: 5 $\mu$m $\times$ 10 $\mu$m
Element: Two-dimensional four-node linear element
Number of elements: 5,000
Number of nodes: 5,151
Initial temperature: 0°C.

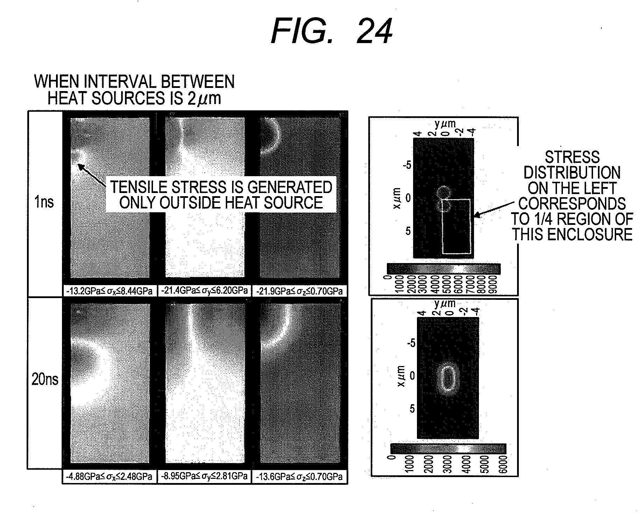

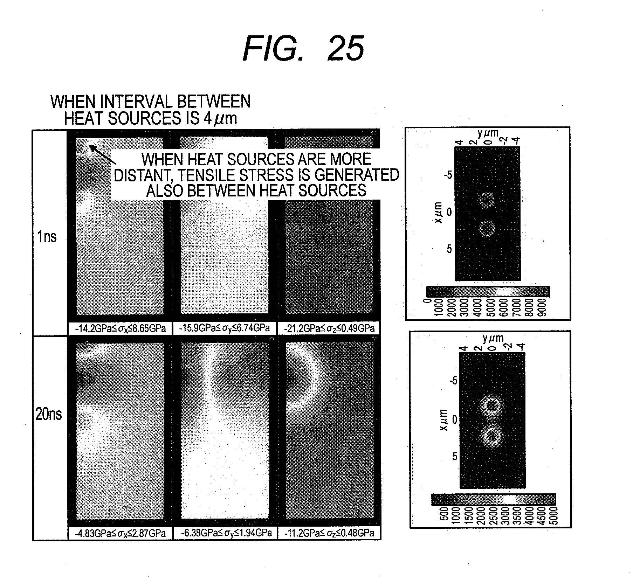

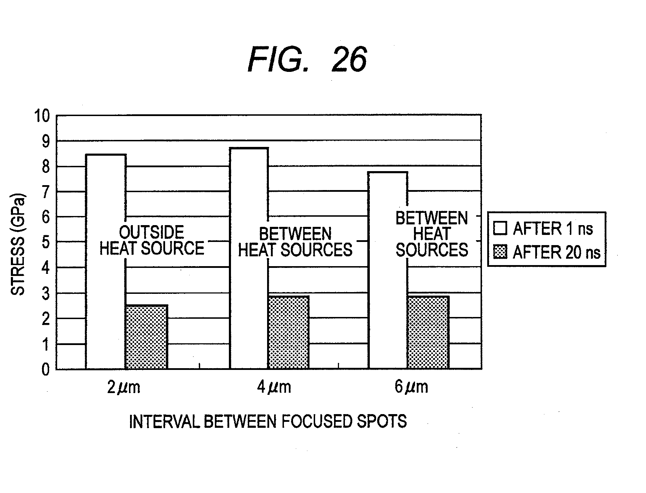

The simulation results are shown in Fig. 24 to Fig. 26. Fig. 24 and Fig. 25 show heat source temperature distribution patterns and stress distribution patterns when the focused spot center interval is 2 $\mu$m and 4 $\mu$m, respectively (the case in which the focused spot center interval is 6 $\mu$m is omitted). Fig. 26 is a graph in which the maximum stress of the stress distribution pattern in Fig. 24 etc. is taken along the vertical axis and the focused spot interval is taken along the horizontal axis.

From Fig. 24 and Fig. 25, it is known that when the spot interval is 2 $\mu$m, the focused spots fuse together to form an elliptic heat source temperature distribution pattern 20 ns after the heat source appears, but when the spot interval becomes at least 4 $\mu$m or more, they no longer fuse together.

Furthermore, it can be found that when the spot interval is 2 $\mu$m, a tensile stress is generated only outside the heat source, but when the spot interval becomes at least 4 $\mu$m or more, a tensile stress works between the two circular heat sources.

[Simulation 4] A stress generated by an elliptic heat source temperature distribution pattern that appears by the laser processing device of the first embodiment was obtained through the use of the "stress analysis model by finite element method".

The main simulation conditions are as follows:

Member to be cut: Sapphire
Major axis diameter $\times$ minor axis diameter of elliptic heat source: 2 $\mu$m $\times$ 0.5 $\mu$m
Laser pulse energy per elliptic heat source: 1 $\mu$J.

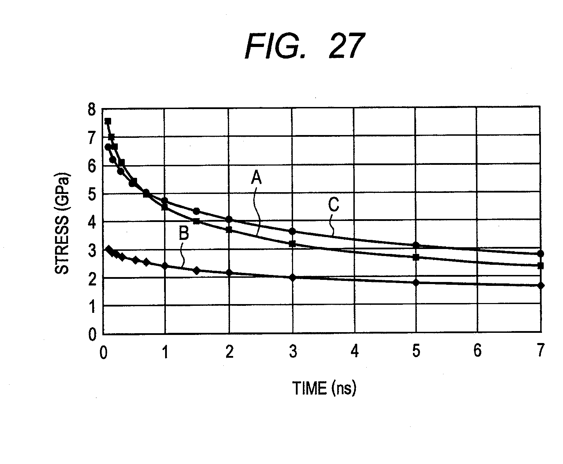

The simulation results are shown in Fig. 27. The center temperature of the heat source about 100 ps after irradiation with the laser pulse reached 9,843°K and the maximum stress was exhibited at that time (at the time point of 0 ns on the horizontal axis in Fig. 27). A curve A represents the stress in the Y direction and a curve B represents the stress in the X direction and it can be found from Fig. 27 that the tensile stress in the direction perpendicular to the major axis of the elliptic heat source temperature distribution pattern (Y direction) is larger than the tensile stress in the major axis direction (X direction).

In Fig. 27, a stress curve C of a circular heat source is also shown. From this, immediately after the elliptic heat source temperature distribution pattern is generated, it can also be found that a tensile stress of the elliptic heat source larger than that of the circular heat source acts, but the cooling speed of the elliptic heat source is larger than that of the circular heat source, and thus the tensile stress of the elliptic heat source becomes smaller than that of the circular heat source after the elapse of a predetermined period of time.

From those described above, it becomes possible to cause cracks to be generated only in the major axis direction of an ellipse by performing irradiation with a focused pulse laser so that a heat source temperature distribution pattern is generated, in which the stress in the direction perpendicular to the major axis exceeds a destruction threshold value of a member to be cut at a timing at which the maximum stress acts and, in contrast, the stress in the major axis direction is not more than the destruction threshold value of the member to be cut.

Furthermore, it can be found that it is necessary to form a heat source having an elliptic profile by the limit time when a destruction stress that causes cracks can act, because as time elapses, the stress decreases and the largest stress acts when the temperature is in its initial and highest state.

<Example>

A processing experiment was conducted through the use of the laser processing device of the first embodiment. The processing conditions are as follows:

Light source 1: Mode locked fiber laser having the following specifications and performance (IMRA America, Inc. Model D1000)

| | |
|---|---|
| Center frequency | : 1,045 nm |
| Beam diameter | : 4 mm |
| Mode | : Single (Gaussian) |
| Pulse width | : 700 fs |
| Pulse energy | : 10 $\mu$J (maximum) |
| Repetitive frequency | 100 kHz (maximum) |
| Average power | : 1,000 mW (maximum) |
| Condenser lens 21 | : Microscope objective (focal length: 4 mm, numerical aperture: 0.65) |
| Focused spot diameter | : 2 $\mu$m |
| Member 3 to be cut | : Sapphire |
| Number of simultaneous focused spots | : 2 |
| Focused spot center interval | : 2 $\mu$m |
| Stage scanning speed | : 1,000 mm / s (interval between neighboring two focused spots is 10 $\mu$m, see Fig. 28(a)). |

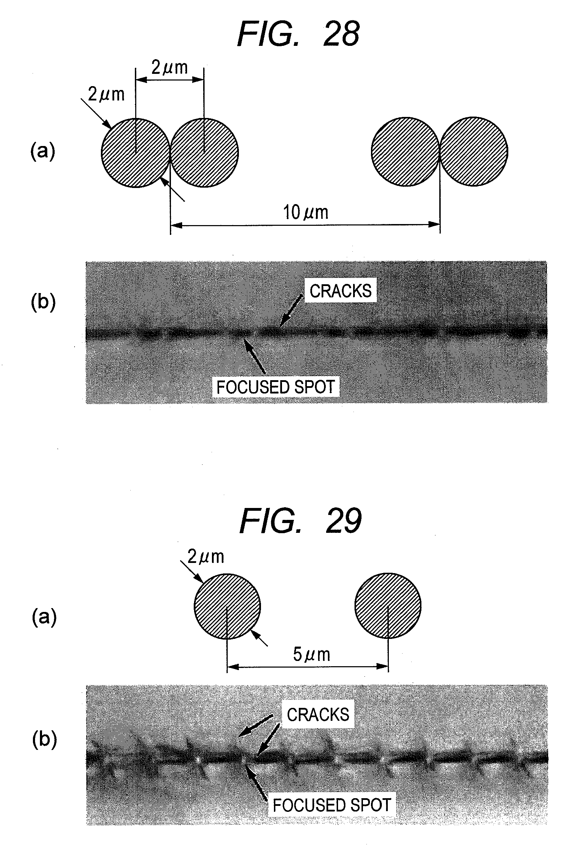

Fig. 28(b) is a radiographic image of sapphire internally processed. It can be seen that cracks extend uniformly in the cutting direction from the two simultaneous focused spots.

<Comparative example>

The processing conditions are the same as those in the above-mentioned example except that the number of simultaneous focused spots is set to 1 and the stage scanning speed is set to 500 mm / s (spot interval is 5 μm, see Fig. 29(a)) in the processing conditions in the above-mentioned example.

Fig. 29(b) is a radiographic image of sapphire internally processed. It can be seen that excess cracks that do not contribute to cutting are generated in a direction different from the direction in which the focused spots are connected (crystal orientation).

**Claims**

1. A laser processing method for forming a modification region serving as a starting point of cutting inside a member to be cut along a planned cutting line by relatively moving an optical axis of a condenser lens along the planned cutting line of the member to be cut and by irradiating the member to be cut with focused laser light, wherein

    the laser processing method comprises a step of simultaneously forming a plurality of focused spots by irradiating regions where the modification regions are to be formed with a plurality of the focused laser lights, wherein the plurality of the focused spots is arranged so that regions of which temperatures are increased by the irradiation of the plurality of the focused laser lights fuse together, and
    the plurality of the focused spots is simultaneously formed on a cross section which is perpendicular to the optical axis of the condenser lens at positions having a predetermined depth from a surface of the member to be cut and which is parallel to the surface or on a cross section which is perpendicular to the surface of the member to be cut at the planned cutting line, and
    at least one of the plurality of the focused spots is formed on a projection line of the planned cutting line onto a cross section which is parallel to the surface or on the optical axis of the condenser lens, **characterized in that**
    the figure connecting the plurality of the focused spots is a triangle on the cross section which is parallel to the surface or on the cross section which is perpendicular to the surface, or is a parallelogram on the cross section which is parallel to the surface wherein two acute-angled vertexes of the parallelogram are located on the projection line of the planned cutting line onto the cross section which is parallel to the surface or on the cross section which is perpendicular to the surface wherein two acute-angled vertexes of the parallelogram are located on the optical axis of the condenser lens.

2. The laser processing method according to claim 1, **characterized in that**

    a portion of the plurality of the focused spots is simultaneously formed on the cross section which is perpendicular to the optical axis of the condenser lens at the positions having the predetermined depth from the surface of the member to be cut and which is parallel to the surface, as a plurality of cross-sectional focused spots,
    at least one of the plurality of the cross-sectional focused spots is formed on the projection line of the planned cutting line onto the cross section which is parallel to the surface,
    a remaining portion of the plurality of the focused spots is simultaneously formed on the cross section which is perpendicular to the surface at the planned cutting line, as a plurality of depth focused spots, and
    at least one of the plurality of the depth focused spots is formed on the optical axis of the condenser lens.

3. The laser processing method according to claim 1, **characterized in that** the regions of which temperatures are increased are regions of which temperatures are increased to 1,500°K or more after the irradiation of the plurality of the focused laser lights.

4. A laser processing device for forming a modification region serving as a starting point of cutting inside a member to be cut along a planned cutting line by relatively moving an optical axis of a condenser lens along the planned cutting line of the member to be cut and by irradiating the member to be cut with focused laser light, wherein

    the laser processing device comprises an optical system which simultaneously forms a plurality of focused spots by irradiating regions where the modification regions are to be formed with a plurality of the focused laser lights, wherein the plurality of the focused spots is arranged so that regions of which temperatures are increased by the irradiation of the plurality of the focused laser lights fuse together, and

the optical system is configured to simultaneously form the plurality of the focused spots on a cross section which is perpendicular to the optical axis of the condenser lens at positions having a predetermined depth from a surface of the member to be cut and which is parallel to the surface or on a cross section which is perpendicular to the surface of the member to be cut at the planned cutting line, and

the optical system is configured to form at least one of the plurality of the focused spots on a projection line of the planned cutting line onto a cross section which is parallel to the surface or on the optical axis of the condenser lens, **characterized in that**

the optical system is configured to simultaneously form the plurality of the focused spots such that the figure connecting the plurality of the focused spots is a triangle on the cross section which is parallel to the surface or is a parallelogram on the cross section which is parallel to the surface wherein two acute-angled vertexes of the parallelogram are located on the projection line of the planned cutting line onto the cross section which is parallel to the surface or on the cross section which is perpendicular to the surface wherein the two acute-angled vertexes of the parallelogram are located on the optical axis of the condenser lens.

5. The laser processing device according to claim 4, **characterized in that**

the optical system is configured to:

simultaneously form a portion of the plurality of the focused spots on the cross section which is perpendicular to the optical axis of the condenser lens at the positions having the predetermined depth from the surface of the member to be cut and which is parallel to the surface, as a plurality of cross-sectional focused spots,
form at least one of the plurality of the cross-sectional focused spots on the projection line of the planned cutting line onto the cross section which is parallel to the surface,
simultaneously form a remaining portion of the plurality of the focused spots on the cross section which is perpendicular to the surface at the planned cutting line, as a plurality of depth focused spots, and
form at least one of the plurality of the depth focused spots on the optical axis of the condenser lens.

6. The laser processing device according to claim 4, wherein

the optical system includes an acousto-optical modulator, a grating pair, and a condenser lens, and
the plurality of the focused spots is formed along the planned cutting line by generating a first-order beam that is the laser beam, the wavelength of which has shifted by the acousto-optical modulator and a zeroth-order beam, the wavelength of which has not shifted, providing an optical path difference by the grating pair, and causing the beams to enter the condenser lens.

7. The laser processing device according to claim 4, **characterized in that** the regions of which temperatures are increased are regions of which temperatures are increased to 1,500°K or more after the irradiation of the plurality of the focused laser lights.

**Patentansprüche**

1. Laserverarbeitungsverfahren zum Bilden einer Modifikationsregion, die als ein Startpunkt eines Schneidens innerhalb eines zu schneidenden Elements entlang einer geplanten Schnittlinie durch relatives Bewegen einer optischen Achse einer Sammellinse entlang der geplanten Schnittlinie des zu schneidenden Elements und durch Bestrahlen des zu schneidenden Elements mit fokussiertem Laserlicht, dient, wobei

das Laserverarbeitungsverfahren einen Schritt des simultanen Bildens einer Vielzahl von fokussierten Punkten durch bestrahlen von Regionen, wo die Modifikationsregionen zu bilden sind, mit einer Vielzahl der fokussierten Laserlichter, wobei die Vielzahl der fokussierten Punkte so angeordnet ist, dass Regionen, deren Temperaturen durch die Bestrahlung der Vielzahl der fokussierten Laserlichter erhöht wurden, miteinander verschmelzen, und die Vielzahl der fokussierten Punkte simultan an einem Querschnitt, der senkrecht zu der optischen Achse der Sammellinse an Positionen mit einer vorbestimmten Tiefe von einer Oberfläche des zu schneidenden Elements und parallel zu der Oberfläche verläuft, oder an einem Querschnitt, der senkrecht zu der Oberfläche des zu schneidenden Elements an der geplanten Schnittlinie verläuft, gebildet wird, und zumindest einer der fokussierten Punkte auf einer Projektionslinie der geplanten Schnittlinie auf einen Querschnitt, der parallel zu der Oberfläche oder auf der optischen Achse der Sammellinse verläuft, gebildet ist,

**dadurch gekennzeichnet, dass**

die Figur, die die Vielzahl von fokussierten Punkten verbindet, ein Dreieck auf dem Querschnitt, der parallel zu der Oberfläche verläuft, oder auf dem Querschnitt, der senkrecht zu der Oberfläche verläuft, ist, oder ein Parallelogramm auf dem Querschnitt, der parallel zu der Oberfläche verläuft, wobei sich zwei spitzwinklige Schenkel des Parallelogramms auf der Projektionslinie der geplanten Schnittlinie auf dem Querschnitt, der parallel zu der Oberfläche verläuft, befinden, oder auf dem Querschnitt, der senkrecht zu der Oberfläche verläuft, wobei sich zwei spitzwinklige Schenkel des Parallelogramms auf der optischen Achse der Sammellinse befinden, ist.

2.  Laserverarbeitungsverfahren gemäß Anspruch 1, **dadurch gekennzeichnet, dass**

ein Teil der Vielzahl der fokussierten Punkte simultan auf dem Querschnitt, der senkrecht zu der optischen Achse der Sammellinse an jenen Positionen verläuft, die eine vorbestimmte Tiefe von der Oberfläche des zu schneidenden Elements aufweist und der parallel zur Oberfläche verläuft, als eine Vielzahl von querschnitts-fokussierten Punkten gebildet wird,

zumindest einer der Vielzahl der querschnitts-fokussierten Punkte auf der Projektionslinie der geplanten Schnittlinie auf dem Querschnitt, der parallel zur Oberfläche verläuft, gebildet wird,

ein verbleibender Teil der Vielzahl der fokussierten Punkte simultan auf dem Querschnitt, der senkrecht zur Oberfläche an der geplanten Schnittlinie verläuft, als eine Vielzahl von tiefenfokussierten Punkten gebildet wird, und

zumindest einer der Vielzahl von tiefenfokussierten Punkte auf der optischen Achse der Sammellinse gebildet wird.

3.  Laserverarbeitungsverfahren gemäß Anspruch 1, **dadurch gekennzeichnet, dass** die Regionen, deren Temperaturen erhöht werden, Regionen sind, deren Temperaturen auf 1.500°K oder höher nach der Bestrahlung von der Vielzahl der fokussierten Laserlichter erhöht werden.

4.  Laserverarbeitungsvorrichtung zum Bilden einer Modifikationsregion, die als ein Startpunkt eines Schneidens innerhalb eines zu schneidenden Elements entlang einer geplanten Schnittlinie durch relatives Bewegen einer optischen Achse einer Sammellinse entlang der geplanten Schnittlinie des zu schneidenden Elements und durch Bestrahlen des zu schneidenden Elements mit fokussiertem Laserlicht, dient, wobei

die Laserverarbeitungsvorrichtung ein optisches System aufweist, das simultan eine Vielzahl von fokussierten Punkten durch bestrahlen von Regionen, wo die Modifikationsregionen zu bilden sind, mit einer Vielzahl der fokussierten Laserlichter, wobei die Vielzahl der fokussierten Punkte so angeordnet ist, dass Regionen, deren Temperaturen durch die Bestrahlung der Vielzahl der fokussierten Laserlichter erhöht wurden, miteinander verschmelzen, bildet, und

das optische System konfiguriert ist, um die Vielzahl der fokussierten Punkte simultan an einem Querschnitt, der senkrecht zu der optischen Achse der Sammellinse an Positionen mit einer vorbestimmten Tiefe von einer Oberfläche des zu schneidenden Elements und parallel zu der Oberfläche verläuft, oder an einem Querschnitt, der senkrecht zu der Oberfläche des zu schneidenden Elements an der geplanten Schnittlinie verläuft, zu bilden, und

das optische System konfiguriert ist, um zumindest einen der fokussierten Punkte auf einer Projektionslinie der geplanten Schnittlinie auf einen Querschnitt, der parallel zu der Oberfläche oder auf der optischen Achse der Sammellinse verläuft, zu bilden,

**dadurch gekennzeichnet, dass**

das optische System konfiguriert ist, um die Vielzahl der fokussierten Punkte derart zu bilden, dass die Figur, die die Vielzahl von fokussierten Punkten verbindet, ein Dreieck auf dem Querschnitt, der parallel zu der Oberfläche verläuft, oder ein Parallelogramm auf dem Querschnitt, der parallel zu der Oberfläche verläuft, wobei sich zwei spitzwinklige Schenkel des Parallelogramms auf der Projektionslinie der geplanten Schnittlinie auf dem Querschnitt, der parallel zu der Oberfläche verläuft, befinden, oder auf dem Querschnitt, der senkrecht zu der Oberfläche verläuft, wobei sich die zwei spitzwinkligen Schenkel des Parallelogramms auf der optischen Achse der Sammellinse befinden, ist.

5.  Laserverarbeitungsvorrichtung gemäß Anspruch 4, **dadurch gekennzeichnet, dass** das optische System konfiguriert ist, um:

einen Teil der Vielzahl der fokussierten Punkte simultan auf dem Querschnitt, der senkrecht zu der optischen Achse der Sammellinse an jenen Positionen verläuft, die eine vorbestimmte Tiefe von der Oberfläche des zu schneidenden Elements aufweist und der parallel zur Oberfläche verläuft, als eine Vielzahl von querschnitts-fokussierten Punkten zu bilden,

zumindest einen der Vielzahl der querschnitts-fokussierten Punkte auf der Projektionslinie der geplanten Schnittlinie auf dem Querschnitt, der parallel zur Oberfläche verläuft, zu bilden,

einen verbleibenden Teil der Vielzahl der fokussierten Punkte simultan auf dem Querschnitt, der senkrecht zur Oberfläche an der geplanten Schnittlinie verläuft, als eine Vielzahl von tiefenfokussierten Punkten zu bilden, und zumindest einen der Vielzahl der tiefenfokussierten Punkte auf der optischen Achse der Sammellinse zu bilden.

**6.** Laserverarbeitungsvorrichtung gemäß Anspruch 4, wobei

das optische System einen akusto-optischen Modulator, ein Gitterpaar und eine Sammellinse umfasst, und die Vielzahl der fokussierten Punkte entlang der geplanten Schnittlinie durch Erzeugen eines Strahls erster Ordnung, der ein Laserstrahl ist, dessen Wellenlänge durch den akusto-optischen Modulator verschoben wurde, und eines Strahls nullter Ordnung, dessen Wellenlänge nicht verschoben wurde, Bereitstellen einer Differenz des optischen Pfades durch das Gitterpaar, und Bewirken der Stahlen, in die Sammellinse einzutreten, gebildet wird.

**7.** Laserverarbeitungsvorrichtung gemäß Anspruch 4, **dadurch gekennzeichnet, dass** die Regionen, deren Temperaturen erhöht werden, Regionen sind, deren Temperaturen auf 1.500°K oder höher nach der Bestrahlung von der Vielzahl der fokussierten Laserlichter erhöht werden.


## Revendications

**1.** Procédé de traitement au laser pour former une région de modification servant en tant que point de début de coupe à l'intérieur d'un élément à couper le long d'une ligne de coupe planifiée en déplaçant de manière relative un axe optique d'un condenseur le long de la ligne de coupe planifiée de l'élément à couper et en rayonnant une lumière laser focalisée vers l'élément à couper, dans lequel

le procédé de traitement au laser comprend une étape de formation simultanée d'une pluralité de points focalisés en rayonnant une pluralité des lumières laser focalisées vers les régions où les régions de modification doivent être formées, dans lequel la pluralité des points focalisés sont agencés de sorte que les régions dont les températures sont augmentées par le rayonnement de la pluralité des lumières laser focalisées fusionnent les unes avec les autres, et

la pluralité des points focalisés sont formés simultanément sur une section transversale qui est perpendiculaire à l'axe optique du condenseur à des positions ayant une profondeur prédéterminée par rapport à une surface de l'élément à couper et qui est parallèle à la surface ou sur une section transversale qui est perpendiculaire à la surface de l'élément à couper au niveau de la ligne de coupe planifiée, et

au moins l'un de la pluralité des points focalisés est formé sur une ligne de projection de la ligne de coupe planifiée sur une section transversale qui est parallèle à la surface ou sur l'axe optique du condenseur, **caractérisé en ce que** la figure reliant la pluralité des points focalisés est un triangle sur la section transversale qui est parallèle à la surface ou sur la section transversale qui est perpendiculaire à la surface, ou est un parallélogramme sur la section transversale qui est parallèle à la surface, dans lequel deux sommets d'angle aigu du parallélogramme sont situés sur la ligne de projection de la ligne de coupe planifiée sur la section transversale qui est parallèle à la surface ou sur la section transversale qui est perpendiculaire à la surface, dans lequel les deux sommets d'angle aigu du parallélogramme sont situés sur l'axe optique du condenseur.

**2.** Procédé de traitement au laser selon la revendication 1, **caractérisé en ce que** une partie de la pluralité des points focalisés sont formés simultanément sur la section transversale qui est perpendiculaire à l'axe optique du condenseur aux positions ayant la profondeur prédéterminée par rapport à la surface de l'élément à couper et qui est parallèle à la surface, en tant que pluralité de points focalisés de section transversale, au moins l'un de la pluralité des points focalisés de section transversale est formé sur la ligne de projection de la ligne de coupe planifiée sur la section transversale qui est parallèle à la surface, une partie restante de la pluralité des points focalisés sont formés simultanément sur la section transversale qui est perpendiculaire à la surface au niveau de la ligne de coupe planifiée, en tant que pluralité de points focalisés de profondeur, et

au moins l'un de la pluralité des points focalisés de profondeur est formé sur l'axe optique du condenseur.

**3.** Procédé de traitement au laser selon la revendication 1, **caractérisé en ce que** les régions dont les températures sont augmentées sont des régions dont les températures sont augmentées à 1.500°K ou plus après le rayonnement de la pluralité des lumières laser focalisées.

4. Dispositif de traitement au laser pour former une région de modification servant en tant que point de début de coupe à l'intérieur d'un élément à couper le long d'une ligne de coupe planifiée en déplaçant de manière relative un axe optique d'un condenseur le long de la ligne de coupe planifiée de l'élément à couper et en rayonnant une lumière laser focalisée vers l'élément à couper, dans lequel

le dispositif de traitement au laser comprend un système optique qui forme simultanément une pluralité de points focalisés en rayonnant une pluralité des lumières laser focalisées vers les régions où les régions de modification doivent être formées, dans lequel la pluralité des points focalisés sont agencés de sorte que les régions dont les températures sont augmentées par le rayonnement de la pluralité des lumières laser focalisées fusionnent les unes avec les autres, et

le système optique est configuré pour former simultanément la pluralité des points focalisés sur une section transversale qui est perpendiculaire à l'axe optique du condenseur à des positions ayant une profondeur prédéterminée par rapport à une surface de l'élément à couper et qui parallèle à la surface ou sur une section transversale qui est perpendiculaire à la surface de l'élément à couper au niveau de la ligne de coupe planifiée, et

le système optique est configuré pour former au moins l'un de la pluralité des points focalisés sur une ligne de projection de la ligne de coupe planifiée sur une section transversale qui est parallèle à la surface ou sur l'axe optique du condenseur, **caractérisé en ce que**

le système optique est configuré pour former simultanément la pluralité des points focalisés de telle sorte que la figure reliant la pluralité des points focalisés est un triangle sur la section transversale qui est parallèle à la surface ou est un parallélogramme sur la section transversale qui est parallèle à la surface, dans lequel deux sommets d'angle aigu du parallélogramme sont situés sur la ligne de projection de la ligne de coupe planifiée sur la section transversale qui est parallèle à la surface ou sur la section transversale qui est perpendiculaire à la surface, dans lequel les deux sommets d'angle aigu du parallélogramme sont situés sur l'axe optique du condenseur.

5. Dispositif de traitement au laser selon la revendication 4, **caractérisé en ce que** le système optique est configuré pour :

former simultanément une partie de la pluralité des points focalisés sur la section transversale qui est perpendiculaire à l'axe optique du condenseur aux positions ayant la profondeur prédéterminée par rapport à la surface de l'élément à couper et qui est parallèle à la surface, en tant que pluralité de points focalisés de section transversale,

former au moins l'un de la pluralité des points focalisés de section transversale sur la ligne de projection de la ligne de coupe planifiée sur la section transversale qui est parallèle à la surface,

former simultanément une partie restante de la pluralité des points focalisés sur la section transversale qui est perpendiculaire à la surface au niveau de la ligne de coupe planifiée, en tant que pluralité de points focalisés de profondeur, et

former au moins l'un de la pluralité des points focalisés de profondeur sur l'axe optique du condenseur.

6. Dispositif de traitement au laser selon la revendication 4, dans lequel

le système optique comprend un modulateur acousto-optique, une paire de réseaux, et un condenseur, et

la pluralité des points focalisés sont formés le long de la ligne de coupe planifiée en générant un faisceau du premier ordre qui est le faisceau laser, dont la longueur d'onde a été décalée par le modulateur acousto-optique, et un faisceau d'ordre zéro, dont la longueur d'onde n'a pas été décalée, en fournissant une différence de trajet optique par la paire de réseaux, et en faisant en sorte que les faisceaux entrent dans le condenseur.

7. Dispositif de traitement laser selon la revendication 4, **caractérisé en ce que** les régions dont les températures sont augmentées sont des régions dont les températures sont augmentées à 1.500°K ou plus après le rayonnement de la pluralité des lumières laser focalisées.

# FIG. 1

# FIG. 2

# FIG. 3

(a)

(b)

# FIG. 4

P2 P0 P1

3b

S1

Y

Z —→ X

e

# FIG. 5

(a)

P0 P1

3b

S1

Y

Z —→ X

f P2

(b)

P0 P1

3b

S1

Y

Z —→ X

g P2 P3

# FIG. 6

# FIG. 7

# FIG. 8

# FIG. 9

# FIG. 10

(a)

(b)

# FIG. 11

# FIG. 12

(a)

(b)

# FIG. 13

(a)

(b)

# FIG. 14

(a)

20A

20A1

Z

Y ⊙ → X

(b)

20B1

20B

-FIRST-ORDER

ZEROTH-ORDER

FIRST-ORDER

Z

Y ⊙ → X

# FIG. 15

# FIG. 16

# FIG. 17

(a)

(b)

## FIG. 18

FIG. 19

# FIG. 20

# FIG. 21

# FIG. 22

(a)

5μm

Y
X

(b)

5μm

Y
X

(a)

$\tau = 0$

*FIG. 23*

(b)

$\tau = 0.003\text{ns}$

(c)

(d)

$\tau = 0.03\text{ns}$

(e)

(f)

$\tau = 0.3\text{ns}$

(g)

# FIG. 24

WHEN INTERVAL BETWEEN
HEAT SOURCES IS 2μm

| 1ns | TENSILE STRESS IS GENERATED ONLY OUTSIDE HEAT SOURCE |
|---|---|

| -13.2GPa≤ σₓ≤8.44GPa | -21.4GPa≤ σ_y≤6.20GPa | -21.9GPa≤ σ_z≤0.70GPa |

| 20ns | |

| -4.88GPa≤ σₓ≤2.48GPa | -8.95GPa≤ σ_y≤2.81GPa | -13.6GPa≤ σ_z≤0.70GPa |

STRESS
DISTRIBUTION
ON THE LEFT
CORRESPONDS
TO 1/4 REGION OF
THIS ENCLOSURE

# FIG. 25

WHEN INTERVAL BETWEEN
HEAT SOURCES IS 4μm

WHEN HEAT SOURCES ARE MORE
DISTANT, TENSILE STRESS IS GENERATED
ALSO BETWEEN HEAT SOURCES

## FIG. 26

INTERVAL BETWEEN FOCUSED SPOTS

## FIG. 27

## FIG. 28

(a)

2 μm

2 μm

10 μm

(b)

CRACKS

FOCUSED SPOT

## FIG. 29

(a)

2 μm

5 μm

(b)

CRACKS

FOCUSED SPOT

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005271563 A

- JP 2006167804 A